# EUROPEAN PATENT APPLICATION

(11) **EP 1 958 862 A2**
(43) Date of publication of application: **20.08.2008**
(21) Application number: 08101531.5
(22) Date of filing: 12.02.2008
(51) Int. Cl.: B62K 23/02, B62M 25/08

(54) **Compact lever-operated control device for mounting on the handlebar of a motorcycle, snowmobile or the like**

(30) Priority: 13.02.2007 IT MI20070041 U
(71) Applicant: DOMINO S.p.A., 23896 Sirtori, Frazione Bevera (Lecco) (IT)
(72) Inventor: Bertini, Paolo, 23896, SIRTORI (Lecco) (IT)
(74) Representative: Ripamonti, Enrico

(57) **Abstract**

A lever-operated control device (1) for mounting on the handlebar of a motorcycle, snowmobile or the like, said device being arranged to operate a user associated with the vehicle, such as its engine gear shifter, and comprising a body with at least one annular portion (3) to be mounted on the vehicle handlebar (4), the device presenting pusher-type control elements (34) connected electrically to a control member of said motorcycle user.

The pusher-type control elements (34) are associated with lever elements (21, 22) hinged to the annular body (2) and movably inserted into corresponding seats (20) of this latter, said elements (21, 22) cooperating with corresponding electrical members (35) inside said body to sense the movement or operation of said lever elements (21, 22) and generate an electrical signal directed to the control member of said motorcycle user, to modify the gear ratio upwards or downwards on the basis of the operated lever element (21, 22) in the case of the gear unit.

## Description

The present invention relates to a lever-operated control device for a user, for example the engine gear shifter, of a motorcycle, snowmobile or similar vehicle, in accordance with the introduction to the main claim.

The device of the present invention can be applied to the handlebar of motorcycles, snowmobiles and the like to operate various users associated with such vehicles, such as: the engine gear shifter, the timer used for example to record the time for travelling one circuit lap, the vehicle computer, or a member for selecting the engine mapping. In the ensuing description reference will be made to one example of application, namely the gear shifter control.

Pushbutton or lever-operated control of the engine gear shifter is known to be also currently used on motorcycles. Devices for controlling the actuator mechanism of such a gear shifter are currently provided on the vehicle handlebar, said devices being however of relatively large dimensions which limit their correct use and considerably penalize the motorcycle appearance.

An object of the present invention is to provide a control device for a user, for example (but not exclusively) an engine gear shifter, applied to the handlebar of a motorcycle or similar vehicle which represents an improvement compared with equivalent known devices.

A particular object of the invention is to provide a device of the aforestated type which is compact in the axial direction (along the handlebar) and can be easily installed on the motorcycle handlebar.

Another object is to provide a device of the stated type, the presence of which on the vehicle handlebar does not detract from the vehicle appearance.

These and other objects which will be apparent to the expert of the art are attained by a device in accordance with the accompanying claims.

The present invention will be more easily understood from the accompanying drawings, which are provided by way of example only, and in which:
Figure 1 is an exploded view of a device of the invention;
Figure 2 is a perspective view of a part of the device of Figure 1 shown assembled;

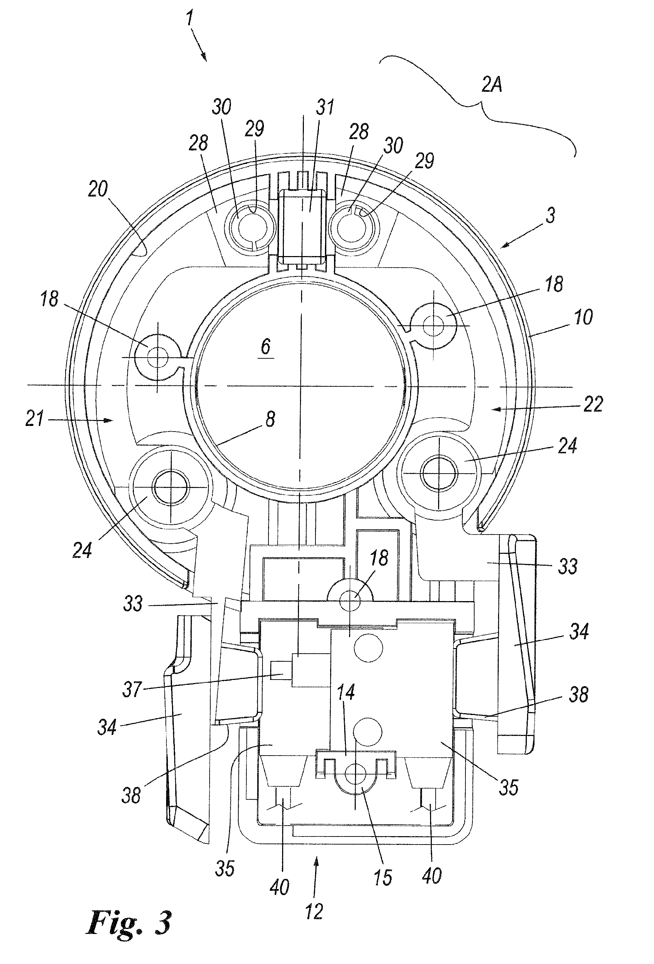

Figure 3 is a front view of the device part of Figure 1;
Figure 4 is an exploded perspective view of a first variant of the invention seen from one side; and
Figure 5 is an exploded perspective view of the variant of Figure 4 seen from another side.

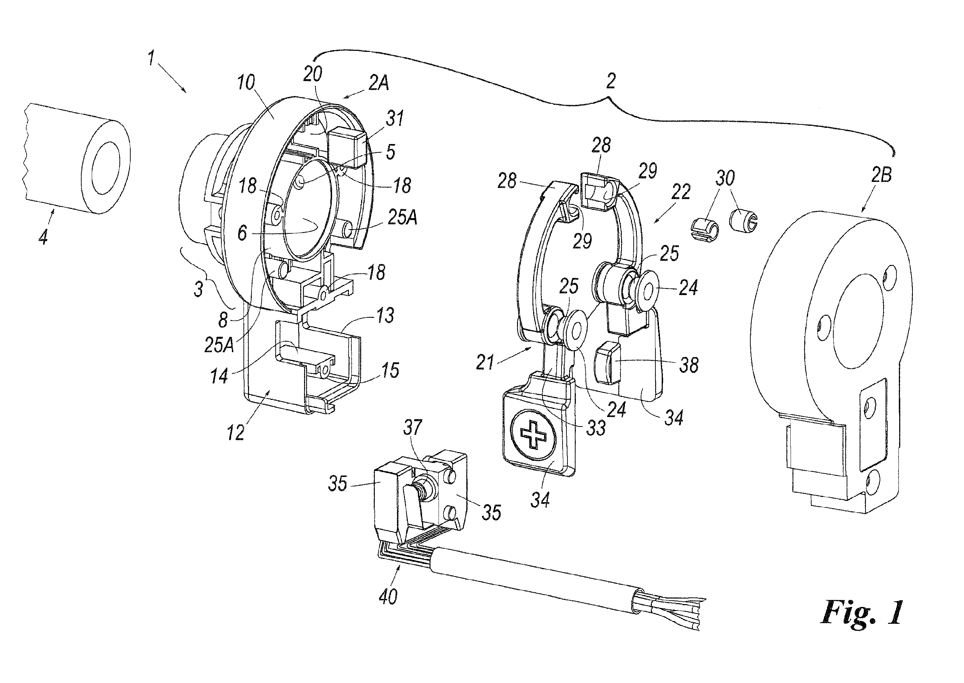

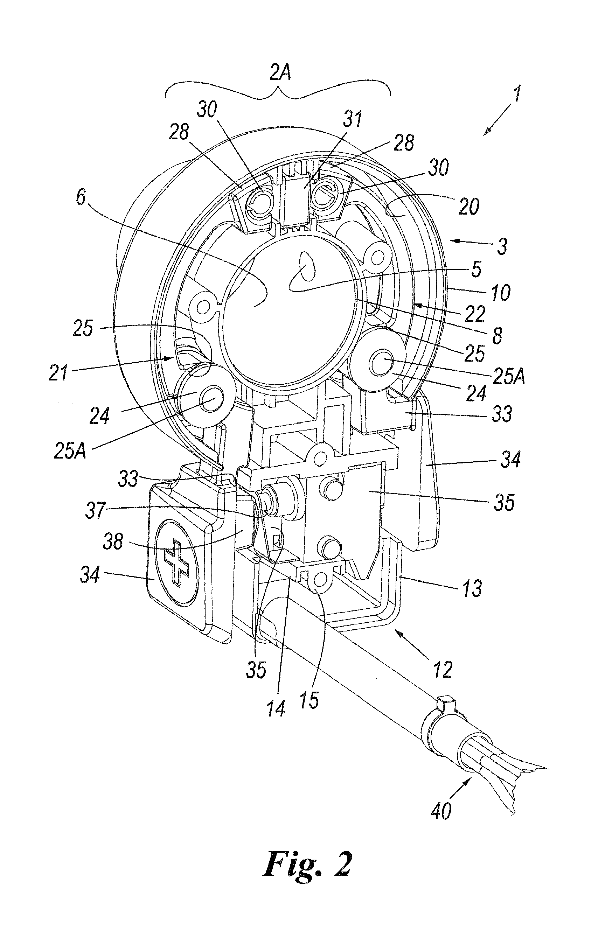

With reference to said Figures from 1 to 3, a device of the invention is indicated overall by 1 and comprises a body 2 defined by two shells 2A and 2B to be assembled by screws or the like. Each shell has an annular shaped portion 3 to be mounted on a handlebar 4 of a motorcycle, snowmobile or the like. The body 1 can be fixed to this handlebar in known manner, for example by screws or the like (not shown) inserted through radial holes 5 (only one of which is visible in Figures 1 and 2) opening into a through hole 6 in the annular portion 3 of the shell 2A or of both the shells 2A and 2B.

The through hole 6 in the shell 2A is bounded by an inner cylindrical part 8 of said shell 2A of the body 2 spaced from a perimetral wall 10 of this latter. From the wall 10 there lowerly projects a recessed portion 12 presenting a perimetral wall 13 and an inner ledge 14 with which an eyelet 15 is associated to receive one of the screws (not shown) for fixing the shells 2A and 2B together. Other screws (not shown) cooperate with cylindrical seats 18 visible in the shell 2A.

In the recess 20 present between the wall 10 and the cylindrical part 8 of the shell 2A of the body 2, two arched first order levers 21 and 22 are positioned, pivoted about rotation pins rigid with the shell 2A and coupled to these by bushes 24 inserted into suitable seats 25 present in the levers themselves and fixed on pins 25A of the shell 2A. These levers 21 and 22 are mutually opposing and present a first C-shaped free end 28 defining a seat 29 for a corresponding ferromagnetic part 30 arranged to cooperate with a permanent magnet 31 located in a fixed position in the shell 2A. This magnet acts as an element for returning each lever into its rest position (with the part 30 in proximity to the magnet 31) after its operation, and as an element resisting this operation. For this operation, each lever 21 and 22 comprises at its second free end 33 an enlarged portion 34 (these hence being opposing on the body 2) acting as a pusher to cooperate with a corresponding microswitch 35 contained in the recessed portion 12. More precisely, two microswitches 35 (one for each lever 21, 22) are contained axially offset within said portion 12; each comprises a movable element 37 cooperating with a projection 38 on the pusher or corresponding portion 34 in order to operate, for example, the motorcycle gear shifter or to operate another vehicle user. For example, to control the gear shifter the microswitches 35 are connected by electric wires 40 to an operating member for this latter, not shown in the drawings.

In detail, in the case under examination, the gear shifter control device is used in the following manner: a first lever 21 changes the gears upwards, while the second lever 22 changes them downwards (gear shifting). Each pressing action on the pusher or portion 34 of a lever causes the part 30 carried by said lever to separate from the magnet 31 and causes the lever to rotate about the pin 24 within the recess 20. This, against the action of the retaining force of the magnet 31, results in pressure on the movable element 37 of the corresponding microswitch 35 and the generation of an electrical signal directed to the gear shifter control member which, in known manner, results in engine gear change.

On releasing the pusher or portion 34, the lever returns into its rest position as the part 30 carried by it is returned to its rest position by the magnet 31. This provides the driver with a "gear changed" sensation.

In detail: the non-linear characteristic between the magnetic force of attraction and the distance means permits to obtain, without adding further mechanisms, a non-linear variation of the force to be applied to the lever to operate the control. This non-linear factor has a direct implication on the "sensation" that the controlled function, for example the gear change, has operated.

The proposed solution enables simple positioning of the device on the handlebar (between the left handgrip and the usual control block present on the left side of the handlebar) as the device is of very small transverse dimensions.

When formed as described, this device does not use elastic return means for the levers, so simplifying its construction, even though springs or similar members can be provided to obtain said return if desired.

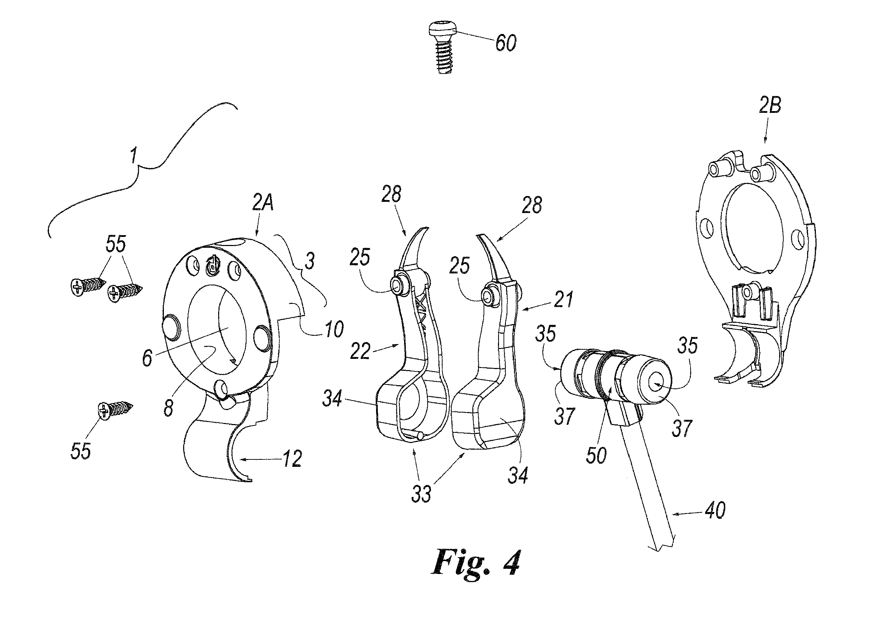

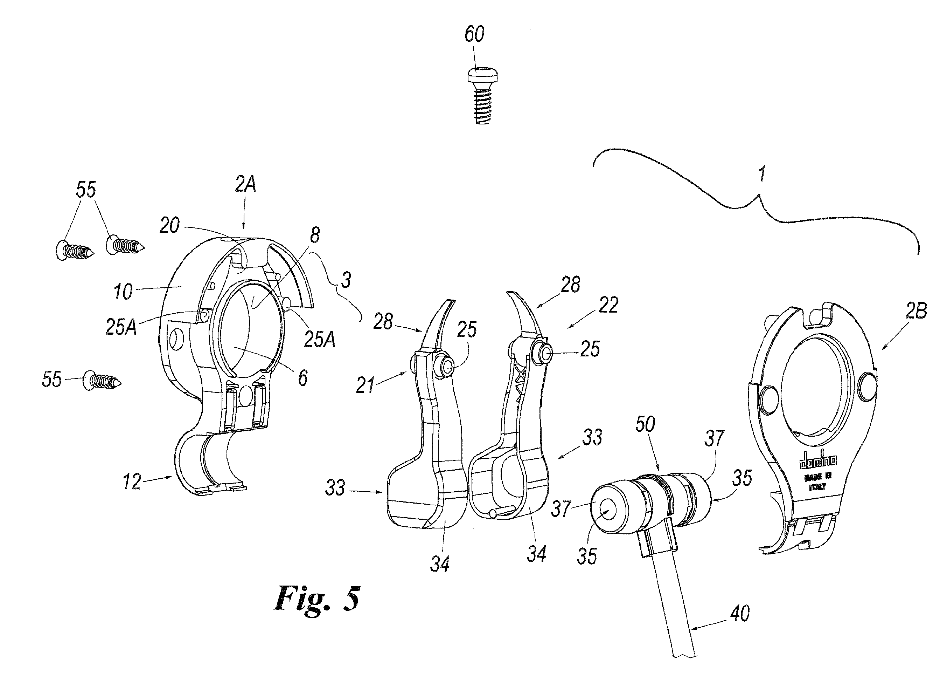

A preferred embodiment of the invention has been described, however others can be obtained in the light of the aforegoing description and are considered as falling within the scope of the ensuing claims. One of these different embodiments is shown in Figures 4 and 5 in which parts corresponding to those already described are indicated by the same reference numerals. The variant under examination does not comprise a magnet 31, with the ends 28 of the levers 21 and 22 not carrying any ferromagnetic part 30. The function of these magnets 31 and parts 30 is performed directly by microswitches 35 (fixed to opposite ends of a tubular sleeve 50 obtained by moulding), the movable end of which acts as an elastic part which returns the corresponding lever to a rest position (in which it does not press the microswitch towards the interior of the sleeve 50).

In this variant, each lever 21 and 22 is shaped to follow the wall 10, and close the body 2 laterally when the lever is at rest.

Figures 4 and 5 also show screws 55 and a screw 60, the first for closing the two shells 2A and 2B of the body 2 and the second for fixing this latter onto the handlebar (not shown).

## Claims

1. A lever-operated control device (1) for mounting on the handlebar of a motorcycle, snowmobile or the like, said device being arranged to control a user on said vehicle, such as the vehicle gear shifter, a timer mounted on the vehicle, a vehicle computer or the like, said device comprising a body (2) with at least one annular portion (3) to be mounted on the vehicle handlebar (4) and presenting pusher-type control elements (34) connected electrically to the control member of said motorcycle user, **characterised in that** the pusher-type control elements (34) are associated with lever elements (21, 22) hinged to the annular body (2) and movably inserted into corresponding seats (20) of this latter, said elements (21, 22) cooperating with corresponding electrical members (35) inside said body to sense the movement or operation of said lever elements (21, 22) and generate an electrical signal directed to the control member of said user, in order to modify its operating or rest state.

2. A device as claimed in claim 1, **characterised by** comprising means (30, 31) for returning the lever elements (21, 22) to a rest position in which they do not activate the electrical members.

3. A device as claimed in claim 1, **characterised by** comprising means (30, 31) resisting the operation of each lever element (21, 22) within the corresponding seat (20).

4. A device as claimed in claims 2 and 3, **characterised in that** the return means and the resisting means are a permanent magnet (31) fixed within the device body (2) and cooperating with ferromagnetic parts (30) associated with second ends (28) of the lever elements (21, 22) opposite those (33) presenting the enlarged portions (34) acting as pushers.

5. A device as claimed in claim 4, **characterised in that** said second end of each lever (21, 22) presents a seat (29) for a corresponding ferromagnetic part (30).

6. A device as claimed in claim 5, **characterised in that** said seat (29) is of C-shape.

7. A device as claimed in claim 1, **characterised in that** the seats (20) for the lever element (21, 22) are provided between the annular portion (3) and a perimetral wall (10) of the device body (2).

8. A device as claimed in claim 1, **characterised in that** said device body (2) comprises two shells (2A, 2B) coupled together and removably fixed to each other.

9. A device as claimed in claims 7 and 8, **characterised in that** the seats (20) for said lever elements (21, 22) are provided in only one of the two shells (2A, 2B).

10. A device as claimed in claim 1, **characterised in that** said electrical members are microswitches (35) located in a portion (12) of the body (2) which is connected to the annular portion (3) and projecting from it, preferably in a lower position of this latter, said microswitches (35) being connected electrically to the control member for the desired function, for example the gear shifter.

11. A device as claimed in claim 10, **characterised in that** each microswitch comprises a movable element (37) arranged to cooperate with a projection (38) associated with an enlarged portion (34) present at a first end (33) of a corresponding lever element (21, 22), said enlarged portion (34) acting as a pusher for controlling the gear shifter.

12. A device as claimed in claim 11, **characterised in that** the enlarged portions (34) of the lever elements lie mutually opposite on the device body (2).

13. A device as claimed in claim 1, **characterised in that** each lever element (21, 22) is defined by a first order lever.

14. A device as claimed in claims 1 and 10, **characterised in that** the microswitches (35) act as elements for returning the corresponding lever to a rest position in which it does not activate the electrical member.
